# EUROPEAN PATENT APPLICATION

(11) **EP 4 470 993 A1**
(43) Date of publication of application: **04.12.2024**
(21) Application number: 23746884.8
(22) Date of filing: 23.01.2023
(51) Int. Cl.: C04B 35/591, C04B 35/596, F16C 19/06, F16C 31/04, F16C 33/32, F16H 25/22

(54) **SILICON NITRIDE SINTERED BODY, MACHINE COMPONENT USING SAME, AND BEARING**

(30) Priority: 27.01.2022 JP 2022011340; 02.03.2022 JP 2022031779
(71) Applicant: NTN Corporation, Osaka-shi Osaka 530-0005 (JP)
(72) Inventor: NAKAMURA, Fumiya, Kuwana-shi, Mie 511-0867 (JP); SATO, Norihide, Kuwana-shi, Mie 511-0867 (JP)
(74) Representative: Marks & Clerk LLP
(86) International application number: PCT/JP2023/001854
(87) International publication number: WO 2023/145672

(57) **Abstract**

To provide: a silicon nitride sintered body having excellent mechanical property and imparting superior lifetime to a product into which the silicon nitride sintered body is processed; a machine part using the silicon nitride sintered body; and a bearing. The silicon nitride sintered body: has the crystallinity of 75-90% calculated by the following formula based on an XRD diffraction pattern on a mirror-polished cutting face of the silicon nitride sintered body; contains one element or more of Y, Ce, Nd and Eu in an amorphous phase; and does not have an inclusion having a diameter of more than 50µm and a pore having a diameter of more than 50µm in a surface layer portion. Crystallinity (%) = Crystalline peak area/(Crystalline peak area + Amorphous peak area) × 100

## Description

### TECHNICAL FIELD

The present invention relates to a silicon nitride sintered body, a machine part using the same, and a bearing, and relates to a silicon nitride bare ball, a rolling element and a rolling bearing.

### BACKGROUND ART

A silicon nitride (Si₃N₄) sintered body has superior mechanical property, heat conductivity, and electric isolation property, so that the silicon nitride sintered body has been accelerated to be applied to a bearing component, an engine component, a tool material, and a heat dissipation substrate material. It has been known that the silicon nitride sintered body is produced from a silicon nitride powder as a starting material. The silicon nitride powder is a sintered resistant powder, and thus a sintering additive is used together with the silicon nitride powder to produce a densified silicon nitride sintered body. Examples of the sintering additive generally include oxides of rare earth elements, aluminum oxide, magnesium oxide, and silicon oxide. In order to improve the mechanical property of the silicon nitride sintered body, it has been considered that a material containing a transition metal element is used as the sintering additive (for example, Patent Documents 1 and 2).

The silicon nitride powder is high in cost, and thus the price of the silicon nitride sintered body produced from the silicon nitride powder tends to be high. Thus, a producing method has been paid attention to that produces the silicon nitride sintered body from a silicon powder (silicon metal powder), as a starting material, that is low in cost relative to the silicon nitride powder, by causing the silicon powder to react and sinter (for example, Patent Documents 3 to 5). As such a producing method, a PS-RBSN (Post-Sintering of Reaction Bonded Silicon-Nitride) method has been known. The PS-RBSN method includes a first step that nitrides a green compact formed by molding a silicon powder, by applying a thermal treatment at a temperature of for example 1,100-1,450 °C under an environment containing nitrogen gas thereto, and a second step that densifies the nitride body obtained in the first step by applying a thermal treatment at a temperature of for example of 1,600-1,950 °C thereto. In the PS-RBSN method, the silicon is expanded in volume in nitriding, so that the shrinkage in sintering is less than a general silicon nitride producing method.

Generally, when a silicon nitride bare ball is produced as a bearing rolling element, a non-sintered ball (a green ball) is molded and a sintered ball (a bare ball) thereof is polished to form its shape to be close to a perfect sphere. The green ball is low in hardness compared to the bare ball and is easy to be processed, and thus polishing to the green ball can be performed with high efficiency compared to the polishing to the bare ball.

The method for processing the green ball (the green processing) is disclosed in, for example, Patent Document 6. Patent Document 6 discloses a method that processes green balls interposed between a pair of working surface plates facing each other, to be close to a perfect sphere while revolving the green balls and rotating the green balls in various directions using relative movements of several types along the facing plates of the working surface plates. Examples of the relative movements of the several types include rotations of the working surface plates to be eccentric to each other, and a combination of the rotation and a linear motion. In this processing device, each of the rough surfaces for processing of the upper and lower working surface plates is formed by a lattice-like rough surface forming component that allows the processing powder to pass therethrough, and many holes are formed on the upper surface of the working surface plates below the rough surface forming component.

### PRIOR ART DOCUMENTS

### PATENT DOCUMENTS

Patent Document 1: JP 2013-234120 A
Patent Document 2: WO 2015/099148 A
Patent Document 3: JP 2004-149328 A
Patent Document 4: JP 2008-247716 A
Patent Document 5: JP 2013-049595 A
Patent Document 6: JP H07-314308 A

### SUMMERY OF THE INVENTION

### PROBLEMS TO BE SOLVED BY THE INVENTION

For example, in a case in which the silicon powder is not sufficiently nitrided in producing the silicon nitride sintered body by the PS-RBSN method, the silicon remains in the silicon nitride sintered body. The remaining silicon causes the deterioration of the mechanical property of the silicon nitride sintered body, so that the mechanical property of the silicon nitride sintered body produced by the PS-RBSN method might be inferior to that of the silicon nitride sintered body produced using the silicon nitride powder as a starting material. In addition, it has been found that the lifetime of the product such as a rolling element, into which the silicon nitride sintered body is processed might be short.

In addition, the presence of the non-nitrided portion causes a difference in shrinkage between the nitrided portion and the non-nitrided portion. Thus, dimensional accuracy of the sintered body might be deteriorated unless the non-nitrided portion is evenly distributed. Further, the silicon nitride might volatilize at a high temperature (decomposition reaction: Si₃N₄ → 3Si + 2N₂). Pores caused by the volatilization are closed by the shrinkage in sintering, however the dimensional accuracy of the sintered body might be deteriorated due to the large shrinkage rate. The deterioration of the dimensional accuracy needs further polishing, however the polishing time might be longer because the silicon nitride bare ball is extremely hard.

An object of the present invention is, in order to solve such problems, to provide: a silicon nitride sintered body having excellent mechanical property and imparting superior lifetime to a product into which the silicon nitride sintered body is processed; a machine part using the silicon nitride sintered body; and a bearing. Another object of the present invention is to provide: a silicon nitride bare ball being capable of improving productivity of a product and imparting superior lifetime to a product into which the silicon nitride bare ball is processed; a rolling element using the silicon nitride bare ball; and a rolling bearing.

### MEANS FOR SOLVING THE PROBLEMS

A silicon nitride sintered body of the present invention has a crystallinity of 75-90%.

The silicon nitride sintered body may contain one or more of Y, Ce, Nd and Eu in an amorphous phase.

The silicon nitride sintered body may contain a rare earth element and an aluminum element. The content of the rare earth element may be 6-13 wt% in terms of oxide, relative to the total weight of the silicon nitride sintered body, and the content of the aluminum element may be 6-13 wt% in terms of oxide, relative to the total weight of the silicon nitride sintered body.

The silicon nitride sintered body may have an inclusion (I) in a surface layer portion that is a region within 2 mm from a surface of the silicon nitride sintered body. A maximum diameter of the inclusion (I) may be 50 µm or less.

The silicon nitride sintered body may have a pore in a surface layer portion that is a region within 2 mm from a surface of the silicon nitride sintered body. A maximum diameter of the pore may be 50 µm or less.

A machine part of the present invention uses the silicon nitride sintered body of the present invention. The machine part may serve as a rolling element.

A bearing of the present invention uses the rolling element.

A silicon nitride bare ball of the present invention has (diameter variation (µm) / mean diameter (mm) ) of 0.015 or less.

The silicon nitride bare ball may be a silicon nitride sintered body containing a rare earth element and an aluminum element. The content of the rare earth element may be 6-13 wt% in terms of oxide, relative to the total weight of the silicon nitride bare ball, and the content of the aluminum element may be 6-13 wt% in terms of oxide, relative to the total weight of the silicon nitride bare ball.

The rare earth element may include one or more of Y, Ce, Nd and Eu. The rare earth element may include Ce.

The silicon nitride bare ball may have an inclusion (I) in a surface layer portion that is a region within 2 mm from a surface of the silicon nitride bare ball. A ratio of a total sectional area of the inclusion (I) to a total sectional area of the surface layer portion may be 0.05% or more.

The inclusion (I) may include an inclusion (It) containing a transition metal element. The inclusion (It) may be a silicide of the transition metal element.

The transition metal element may include one or more of Ti, Cr and Mn. The transition metal element may include Cr.

A maximum diameter of the inclusion (I) may be 50 µm or less.

The silicon nitride bare ball may have a pore in a surface layer portion that is a region within 2 mm from a surface of the silicon nitride bare ball. A maximum diameter of the pore may be 50 µm or less.

A rolling element of the present invention is formed by polishing the silicon nitride bare ball of the present invention.

A rolling bearing of the present invention uses the rolling element of the present invention.

### EFFECT OF THE INVENTION

The present invention can provide: a silicon nitride sintered body having excellent mechanical property and imparting superior lifetime to a product into which the silicon nitride sintered body is processed; a machine part using the silicon nitride sintered body; and a bearing.

The silicon nitride bare ball of the present invention has (diameter variation (µm) / mean diameter (mm)) of 0.015 or less, and thus the polishing time in the following polishing step can be shortened, which improves the productivity.

The silicon nitride bare ball is a silicon nitride sintered body containing a rare earth element and an aluminum element. In addition, the content of the rare earth element is 6-13 wt% in terms of oxide, relative to the total weight of the silicon nitride bare ball, and the content of the aluminum element is 6-13 wt% in terms of oxide, relative to the total weight of the silicon nitride bare ball. Accordingly, the nitriding of the silicon metal and the sintering thereafter can be accelerated, and thus an agglomerate of a metal inclusion caused by a non-nitrided silicon metal element is prevented from causing and a dense sintered body can be easily obtained. Thus, superior lifetime of a product into which the silicon nitride bare ball is processed can be obtained. Further, the above-described configuration enables to produce the dense sintered body at a relatively low temperature and to suppress volatilization of the silicon nitride caused at a high temperature. Accordingly, pores due to the volatilization are prevented from causing and thus the shrinkage of the pores is not caused. Thus, the shrinkage rate becomes small, and the bare ball close to the true sphere can be obtained. As a result, the value of (diameter variation (µm) / mean diameter (mm)) is easily set to 0.015 or less.

The silicon nitride bare ball contains the transition metal element, and thus the growing of an acicular crystal of the silicon nitride and the nitriding of the silicon metal can be accelerated. Accordingly, a dense sintered body can be obtained, which improves the dimensional accuracy and the mechanical property of the sintered body.

### BRIEF DESCRIPTION OF THE DRAWINGS

Fig. 1 is a vertical sectional view showing one example of a bearing according to the present invention.
Fig. 2 is a vertical sectional view showing other example of the bearing according to the present invention.
Fig. 3 is a vertical sectional view showing another example of the bearing according to the present invention.
Fig. 4 is a general view showing a measuring method of a diameter of a silicon nitride bare ball.
Fig. 5 is a flowchart showing a general step of a producing process of the silicon nitride bare ball.
Fig. 6 is a general sectional view showing a structure of a green processing device.

### MODE FOR CARRYING OUT THE INVENTION

Hereinafter, a first embodiment of the present invention is described.

### FIRST EMBODIMENT

### Silicon nitride sintered body

A silicon nitride sintered body (hereinafter, also simply referred to as a sintered body) of the first embodiment has a crystallinity of 75-90%. Here, the crystallinity of the silicon nitride sintered body denotes a ratio of a crystalline phase to a whole component of the silicon nitride sintered body. The crystallinity can be calculated by the following formula based on an XRD diffraction pattern on a mirror-polished cutting face of the silicon nitride sintered. Crystallinity (%) = Crystalline peak area/(Crystalline peak area + Amorphous peak area) × 100

The crystallinity of the silicon nitride sintered body is specifically "(Peak area of crystalline silicon nitride and other crystalline component in XRD diffraction pattern) / (Sum of peak areas of whole components of sintered body in XRD diffraction pattern)". Here, the crystalline silicon nitride has α-type, β-type or γ-type crystalline structure. Examples of the whole components of the sintered body include silicon, silicon nitride, and a component derived from a sintering additive that accelerates the sintering in a thermal treatment when silicon nitride is produced.

In the silicon nitride sintered body produced by, for example, the PS-RBSN method (a two-step sintering method) using silicon powder and a sintering additive, the sintering additive is a main component in an amorphous phase in the sintered body under a specified condition. The PS-RBSN method is a two-step sintering method including a silicon nitriding step and a sintering step thereafter. For example, in a case in which a green compact formed of the silicon powder and the sintering additive is subject to a thermal treatment in a nitrogen atmosphere by the PS-RBSN method and thus the silicon is completely nitrided and the whole of the sintering additive is amorphized, the crystallinity is "(Peak area of crystalline silicon nitride in XRD diffraction pattern) / (Sum of peak areas of whole components of sintered body in XRD diffraction pattern)". In a case in which the silicon is completely nitrided and the sintering additive is partially crystallized, the crystallinity is " (Peak area of crystalline silicon nitride and crystalline component derived from sintering additive in XRD diffraction pattern) / (Sum of peak areas of whole components of sintered body in XRD diffraction pattern)".

The material of the silicon nitride sintered body may be: only the silicon nitride powder; the silicon powder and nitrogen gas; or the silicon powder, the sintering additive and the nitrogen gas. In a case in which the silicon nitride sintered body is produced by the PS-RBSN method using the raw material powder containing the silicon powder and the sintering additive, the glass phase (amorphous phase) is apt to exist in its system during the sintering of the raw material powder, which accelerates nitriding of the silicon powder (silicon metal powder) and the sintering thereafter. As a result, the crystallinity of the sintered body is easily set to 75-90%, and thus the mechanical property thereof is improved. The raw material of the silicon nitride sintered body may employ any raw material including powder and gas, and the producing method of the silicon nitride sintered body is not limited to the PS-RBSN method.

The crystallinity of the silicon nitride sintered body is 75% or more, preferably 78% or more, may be 81% or more. The crystallinity of the silicon nitride sintered body is 90% or less, preferably 87% or less, may be 84% or less. The crystallinity of the silicon nitride sintered body within the above-described range has excellent mechanical property and imparts superior lifetime to a product into which the silicon nitride sintered body is processed.

The crystallinity of the silicon nitride sintered body does not necessarily correlate with the amount of the silicon nitride in the sintered body due to the degree of the nitriding of the silicon or the crystalline substance derived from the sintering additive. For example, even in a case in which the non-nitrided silicon remains, the crystallinity of the sintered body may be in a range of 75-90% due to the presence of the crystalline substance derived from the sintering additive.

The silicon nitride sintered body of the first embodiment may contain a rare earth element and/or an aluminum element. In a case in which the silicon nitride sintered body contains the rare earth element, the content of the rare earth element is preferably 6-13 wt% in terms of oxide, relative to the total weight of the silicon nitride sintered body. In a case in which the silicon nitride sintered body contains the aluminum element, the content of the aluminum element is preferably 6-13 wt% in terms of oxide, relative to the total weight of the silicon nitride sintered body.

Examples of the rare earth element include yttrium (Y), lanthanum (La), cerium (Ce), samarium (Sm), neodymium (Nd), dysprosium (Dy), europium (Eu), and erbium (Er) . Of these rare earth elements, yttrium (Y), cerium (Ce), neodymium (Nd), and europium (Eu) are preferable. In particular, cerium (Ce) is more preferable because cerium (Ce) accelerates nitriding and improves producing efficiency.

The silicon nitride sintered body preferably contains the rare earth element in the amorphous phase, in particular contains one or more of the rare earth elements selected from Y, Ce, Nd and Eu. The silicon nitride sintered body may contain the rare earth element in the crystalline phase.

The content of the rare earth element is preferably 6.5 wt% or more in terms of oxide, may be 7.0 wt% or more, or 7.5 wt% or more in terms of oxide, relative to the total weight of the silicon nitride sintered body. The content of the rare earth element is preferably 12.5 wt% or less, 11.5 wt% or less, or 10.5 wt% or less. With the crystallinity of the silicon nitride sintered body within the range of 75-90% and the content of the rare earth element within the above-described range, the most part of the crystalline phase in the sintered body is easily turned into the silicon nitride. Thus, the silicon nitride sintered body having superior mechanical property and superior energy efficiency in producing and imparting superior lifetime to a product into which the silicon nitride sintered body is processed can be easily obtained.

The rare earth element is derived from, for example, a sintering additive containing a rare earth element (normally, an oxide of a rare earth element) employed when the silicon nitride sintered body is produced. With the content of the rare earth element in the silicon nitride sintered body within the above-described range, in a case in which the silicon nitride sintered body is produced by the PS-RBSN method, the nitriding reaction of the silicon powder (silicon metal powder), which is a raw material, is accelerated and the sintering thereafter is also accelerated. The content of the rare earth element may be adjusted based on a compounding amount of the sintering additive containing the rare earth element (for example, the oxide of the rare earth element) compounded to the raw material.

The content of the aluminum element is preferably 6.5 wt% or more in terms of oxide, more preferably 7.0 wt% or more, or 7.5 wt% or more in terms of oxide, relative to the total weight of the silicon nitride sintered body. The content of the aluminum element is preferably 12.5 wt% or less, more preferably 11.5 wt% or less, or 10.5 wt% or less. In a case in which the silicon nitride sintered body contains the rare earth element and the aluminum element, the content of the aluminum element (in terms of oxide) may be within ± 5 wt%, ± 2 wt%, or ± 1 wt% of the content of the rare earth element (in terms of oxide), or alternatively the content of the aluminum element may be equal to the content of the rare earth element. With the crystallinity of the silicon nitride sintered body within a range of 75-90% and the content of the aluminum element within the above-described range, the most part of the crystalline phase in the sintered body is easily turned into the silicon nitride. Thus, the silicon nitride sintered body having superior mechanical property and superior energy efficiency in producing and imparting superior lifetime to a product into which the silicon nitride sintered body is processed can be easily obtained.

The aluminum element is derived from, for example, a sintering additive containing an aluminum element (normally, an aluminum oxide) employed when the silicon nitride sintered body is produced. With the content of the aluminum element in the silicon nitride sintered body within the above-described range, in a case in which the silicon nitride sintered body is produced by the PS-RBSN method, the sintering is accelerated. The content of the aluminum element may be adjusted based on a compounding amount of the sintering additive containing the aluminum element (for example, the aluminum oxide) compounded to the raw material.

The content of each of the rare earth element and the aluminum element is determined using an X-ray fluorescence analysis device (XRF), an energy dispersive X-ray spectroscopy (EDX), or an inductively coupled plasma (ICP) atomic emission spectroscopy. This shall be applied to a silicon nitride bare ball of a second embodiment. Specifically, the content of each of the rare earth element and the aluminum element in the silicon nitride sintered body is determined using the above-described device and is converted into the oxide of the rare earth element (RE) (RE₂O₃ or REO₂) or the aluminum oxide (Al₂O₃). Other elements that form the silicon nitride sintered body may be also analyzed using the above-described device, and the total weight of the silicon nitride sintered body is calculated and then the above-described content of each of the rare earth element and the aluminum element is determined. In a case in which the raw material powder employed for producing the silicon nitride sintered body contains silicon (silicon metal powder) and the silicon is turned into Si₃N₄ by the nitriding thereof, the weight of Si₃N₄ in the silicon nitride sintered body is 1.67 times as large as the weight of the silicon. Thus, considering the weight change of the silicon before and after the nitriding, the content of each of the oxide of the rare earth element and the aluminum oxide can be calculated based on the composition of the raw material powder.

The silicon nitride sintered body of the first embodiment preferably includes an inclusion (I) in a surface layer portion which is a region within 2 mm from the surface of the silicon nitride sintered body. The inclusion (I) contains a component of element other than the silicon nitride. Examples of the inclusion (I) include an inclusion containing a rare earth element, an aluminum element or a transition metal element (It), and an inclusion containing a non-nitrided silicon element (Is) . The inclusion (It) preferably contains a silicide of a transition metal element. The inclusion (Is) is, for example, an agglomerate of a non-nitrided silicon element. The inclusion (I) preferably contains the inclusion (It) and does not contain the inclusion (Is) or a content rate of the inclusion (Is) is small. The inclusion means that the whole portion thereof exists in the surface layer portion which is a region within 2 mm from the surface of the silicon nitride sintered body.

The inclusion (It) is derived from, for example, the sintering additive (for example, an oxide of a rare earth element, an aluminum oxide, or an oxide of the transition metal element) employed when the silicon nitride sintered body is produced. For example, the silicide of the transition metal element is formed when the silicon nitride sintered body is produced. For example, in a case in which the silicon nitride sintered body is produced by the PS-RBSN method, the nitriding of the silicon powder can be accelerated and further the growing of an acicular crystal of the silicon nitride can be accelerated by employing the sintering additive containing the transition metal element such as chromium oxide (Cr₂O₃). Thus, thermal treatment time required for the nitriding of the silicon can be reduced, and the energy efficiency in producing the silicon nitride sintered body can be improved.

The inclusion (Is) might be formed, for example, in a case in which the nitriding of the silicon powder (silicon metal powder), which is a raw material, is insufficient when the silicon nitride sintered body is produced by the PS-RBSN method. In a case in which the inclusion (Is) having a large diameter is formed or the rate of the inclusion (Is) is increased in the surface layer portion, the mechanical property such as the fracture toughness of the silicon nitride sintered body is deteriorated, and the lifetime of a product into which the silicon nitride sintered body is processed is deteriorated. It is preferable that an amount of the inclusion (Is) in the surface layer portion of the silicon nitride sintered body is small, and thus no inclusion (Is) is more preferable.

The transition metal element is not especially limited as long as the transition metal element is any element that belongs to the groups 3 to 11 in the IUPAC periodic table. The transition metal element is preferably one or more of Ti, Cr, and Mn. The transition metal element more preferably contains Cr. The transition metal element containing Cr can further improve the fracture toughness of the silicon nitride sintered body.

The maximum diameter of the inclusion (I) in the surface layer portion of the silicon nitride sintered body is not especially limited. Specifically, the maximum diameter of the inclusion (I) is preferably 50 µm or less. The maximum diameter of the inclusion (I) may be 40 µm or less, 30 µm or less, or 25 µm or less, and 0.5 µm or more. The maximum diameter of the inclusion (I) in the surface layer portion means a diameter of the inclusion (I) having the largest diameter among the inclusions (I) in the surface layer portion. With the maximum diameter of the inclusion (I) within the above-described range, the inclusion (I) is prevented from being an origin of fracture, so that the silicon nitride sintered body having superior fracture toughness can be easily obtained. Further, with the maximum diameter of the inclusion (I) within the above-described range, the particle shedding of the inclusion from the silicon nitride sintered body, which leads to the defect, can be suppressed, and thus superior lifetime of a product such as a rolling element of a bearing, into which the silicon nitride sintered body is processed can be easily obtained. The maximum diameter of the inclusion (I) is adjusted based on, for example, a degree of the nitriding of the silicon powder as a raw material, a compounding amount and/or a particle diameter of the sintering additive containing the rare earth element, the aluminum element and/or the transition metal element compounded to the raw material, and the kind of the element in the sintering additive. In a case in which the crystallinity of the silicon nitride sintered body is 75-90%, the amorphous phase is 10-25% . Thus, the amorphous phase, which is substantially the whole portion in the inclusion, is less in the sintered body, so that the maximum diameter of the inclusion (I) is easily set to 50 µm or less.

The silicon nitride sintered body of the first embodiment preferably has a pore in the surface layer portion which is a region within 2 mm from the surface of the silicon nitride sintered body. The maximum diameter of the pore in the section of the silicon nitride sintered body is preferably 50 µm or less . The maximum diameter of the pore may be 40 µm or less, 30 µm or less, or 25 µm or less, or alternatively the silicon nitride sintered body need not have a pore. With the maximum diameter of the pore within the above-described range, when the silicon nitride sintered body is processed into a product such as a rolling element of a bearing, superior lifetime of the product can be easily obtained. The pore in the surface layer portion means a pore existing in the surface layer portion which is a region within 2 mm from the surface of the silicon nitride sintered body, specifically the all portion of the pore existing in the surface layer portion. The maximum diameter of the pore in the surface layer portion means a diameter of the pore having the largest diameter among the pores in the surface layer portion. The maximum diameter of the pore is adjusted, for example, by adjusting the content of the silicon nitride employed as a raw material and/or a compounding amount of the sintering additive when the silicon nitride sintered body is produced by the PS-RBSN method. In a case in which the crystallinity of the silicon nitride sintered body is 75-90%, the amorphous phase is 10-25%. Thus, the amorphous phase is easily filled as a liquid phase, between the crystalline phases in sintering and the maximum diameter of the pore is easily set to 50 µm or less.

The maximum diameter of the inclusion (I), and the maximum diameter of the pore are defined by measuring the inclusion (I) and the pore, the all portion thereof existing within the surface layer portion on a section of a test piece produced by a method described in the following example. The maximum diameter of the inclusion (I), and the maximum diameter of the pore are calculated by a method described in the following example.

An especially preferable silicon nitride sintered body of the first embodiment is the silicon nitride sintered body that contains the rare earth element and the aluminum element, has the crystallinity of 75-90%, and contains one or more of Y, Ce, Nd and Eu in the amorphous phase. The content of the rare earth element is 6-13 wt% in terms of oxide, relative to the total weight of the silicon nitride sintered body. The content of the aluminum element is 6-13 wt% in terms of oxide, relative to the total weight of the silicon nitride sintered body. Further, the silicon nitride sintered body has an inclusion (I) and a pore in a surface layer portion which is a region within 2 mm from the surface of the silicon nitride sintered body. A maximum diameter of the inclusion (I) is 50 µm or less. A maximum diameter of the pore is 50 µm or less. The above-described element and/or the above-described numeral range may be appropriately applied to this configuration.

The shape of the silicon nitride sintered body of the first embodiment is not especially limited, and thus a spherical shape, a cylindrical shape, a conical shape, a truncated conical shape, or a rectangular parallelepiped shape may be appropriately selected based on its usage, however the spherical shape is preferable. The size of the silicon nitride sintered body is not also especially limited, and for example, the diameter of the spherical shape may be set to 0.5-10 cm, and the diameter of a bottom surface of the cylindrical shape may be set to 0.5-15 cm and the height thereof may be set to 3-20 cm.

### Producing the silicon nitride sintered body

The silicon nitride sintered body is preferably produced by, for example, the PS-RBSN method (a two-step sintering method). Specifically, the silicon nitride sintered body is produced by the following first or second method.

### First method

In the PS-RBSN method, generally, powder is granulated to improve flowability of the powder. The first method is to produce the silicon nitride sintered body having the crystallinity of 75-90%. The first method includes, for example, a granulating step that forms granulated powder from a raw material powder containing a silicon powder and a sintering additive, a molding step that molds the obtained granulated powder into a green compact, a degreasing step, and a sintering step that sinters the degreased green compact.

In the granulating step, the raw material and a binder are mixed in water and/or an organic solvent (for example, ethanol) to form slurry and then the slurry is spray-granulated and dried using a spray dry to form the granulated powder. An organic binder may be employed as the binder.

In the following molding step, the granulated powder is molded into a predetermined shape to form a green compact. In the degreasing step, the obtained green compact is degreased by heating the green compact at a temperature of 700-1,000 °C in a nitrogen atmosphere.

The sintering step includes a first step that nitrides the degreased green compact by applying a thermal treatment thereto, for example, in a nitrogen atmosphere at a temperature of 1,200-1,500 °C, and a second step that sinters the obtained nitride body by applying a thermal treatment thereto, for example, in a nitrogen atmosphere at a temperature of 1, 600-1, 950 °C (preferably 1, 600-1, 900 °C) .

### Second method

The second method is to produce the silicon nitride sintered body having the crystallinity of 75-90%. The second method includes, for example, a mixing step that mixes the raw material powder containing the silicon powder and the sintering additive in a dry manner, a molding step that molds the mixed raw material powder into a green compact, and a sintering step that sinters the green compact. Unlike the first method, the second method performs all steps in the PS-RBSN method in a dry manner. In addition, polishing may be performed on the silicon nitride sintered body as needed after the sintering step.

In the mixing step, the raw material powder is mixed in a dry manner without using water and an organic solvent. Further, in this step, it is preferable that the raw material powder is mixed without using a binder. The particle diameter of the powder after mixing is not especially limited, however D90 is preferably 10-100 µm. Further, D50 is preferably 2-10 µm. With D90 and/or D50 within the above-described ranges, superior flowability and moldability can be shown and thus a dense silicon nitride sintered body can be obtained. D50 and D90 denote a 50% cumulative particle diameter and a 90% cumulative particle diameter, respectively, and are measured by a laser diffraction particle size analyzer.

In the following molding step, the mixed powder is molded into a predetermined shape to form a green compact. The sintering step includes a first step that nitrides the obtained green compact by applying a thermal treatment thereto, for example, in a nitrogen atmosphere at a temperature of 1,200-1,500 °C, and a second step that sinters the obtained nitride body by applying a thermal treatment thereto, for example, in a nitrogen atmosphere at a temperature of 1, 600-1,950 °C (preferably 1,600-1, 900 °C) . In the first step, from a viewpoint of the producing efficiency, it is preferable that the temperature within 1,200-1,500 °C is not kept for one hour or more. Specifically, it is preferable that the nitriding is performed while increasing the temperature from, for example, approximately 1,100 °C to a sintering temperature in the second step at a specified temperature increasing rate. The temperature increasing rate may be, for example, 2 °C/minute or more, 2.5 °C/minute or more, or 5 °C/minute or more. The temperature increasing rate is, for example, 20 °C/minute or less, preferably 15 °C/minute or less.

The second method has the following advantageous effects compared to the first method.

In a case in which the all steps in the PS-RBSN method is performed in a dry manner, for example, the oxidation of the silicon powder caused when using the water solvent can be prevented, and the environmental impact when using the organic solvent such as ethanol can be reduced.

In a case in which the silicon nitride sintered body is produced by the PS-RBSN method without using the organic binder, the shrinkage caused by the sintering can be reduced and thus the dimensional accuracy of the sintered body can be improved. In the first method, since the organic binder is used for granulating particles, the degreasing step is necessary thereafter. In such a case, a cavity is caused after the organic binder is removed in the degreasing step, and thus the shrinkage caused by the sintering might be increased.

Further, when the shrinkage is reduced, the polishing time in the following polishing step can be shortened.

Generally, in a conventional method that employs Si₃N₄ powder as a raw material to form a dense sintered body, it is preferable to employ fine Si₃N₄ powder (D50 is 1 µm or less). Since such fine powder is inferior in flowability and moldability, it is necessary that the raw material powder and the binder are turned into slurry using water or ethanol and then the slurry is spray-granulated and dried using a spray dry to form the granulated body. However, in the PS-RBSN method, the silicon powder is turned into fine powder by breakage due to the volume expansion in the nitriding step, so that it is not necessary to employ the fine powder such as Si₃N₄ powder as the raw material to form the dense sintered body. Since the raw material powder is not fine powder, the flowability and moldability required to form the molded body can be secured without using the granulated powder.

In the producing method of the silicon nitride sintered body such as the first method and the second method, the sintering additive employed in the raw material powder is preferably a sintering additive containing the rare earth element, the aluminum element, or the transition metal element, and more preferably a sintering additive containing the oxide of the rare earth element, the aluminum element, or the transition metal element. The sintering additive containing the rare earth element preferably contains any one of Y₂O₃, CeO₂, Nd₂O₃, and Eu₂O₃. The sintering additive containing the aluminum element preferably contains Al₂O₃. The sintering additive containing the transition metal element preferably contains any one of Cr₂O₃, TiO₂, MnO, and Fe₂O₃.

The raw material powder may contain, in addition to the silicon powder and the sintering additive, the silicon nitride powder and/or the organic binder, and the sintering additive containing an element other than the rare earth element, the aluminum element and the transition metal element.

The content of the silicon powder in the raw material powder is preferably 65 wt% or more, more preferably 67 wt% or more, further more preferably 69 wt% or more, or 71 wt% or more, relative to the total weight of the silicon powder, the silicon nitride powder and the sintering additive. The content of the silicon powder in the raw material is preferably 80 wt% or less, 78 wt% or less, or 76 wt% or less. The raw material powder may contain or may not contain the silicon nitride powder.

The content of the sintering additive containing the rare earth element (for example, the oxide of the rare earth element) in the raw material powder is preferably 10 wt% or more, more preferably 11 wt% or more, further more preferably 12 wt% or more, or 13 wt% or more, relative to the above-described total weight. The content of the rare earth element may be 17.5 wt% or less, 16.5 wt% or less, or 15.5 wt% or less. The content of the sintering additive containing the aluminum element (for example, the aluminum oxide) in the raw material powder is preferably 10 wt% or more, more preferably 11 wt% or more, further more preferably 12 wt% or more, or 13 wt% or more, relative to the above-described total weight. The content of the aluminum element may be 17.5 wt% or less, 16.5 wt% or less, or 15.5 wt% or less. In a case in which the content of the sintering additive in the raw material powder is less, the dense silicon nitride sintered body is hardly obtained. In a case in which the content of the sintering additive in the raw material is much, the mechanical property of the silicon nitride sintered body is deteriorated.

The mean particle diameter of the silicon powder in the raw material powder may be, for example, 5 µm or less. In a case in which the raw material contains the silicon nitride, the mean particle diameter of the silicon nitride may be, for example, 0.5 µm or less. The mean particle diameter of the sintering additive may be 10 µm or less, 7 µm or less, 5 µm or less, 3 µm or less, 2 µm or less, 1 µm or less, or 0.4 µm or less, depending on the kind of the sintering additive. The mean particle diameter is a 50% cumulative particle diameter and is measured by a laser diffraction particle size analyzer.

One aspect of the above-described second method is to produce, for example, the silicon nitride sintered body containing the rare earth element and the aluminum element. The one aspect includes a mixing step that mixes the raw material powder containing the silicon powder and the sintering additive in a dry manner, a molding step that molds the mixed raw material powder into a green compact, and a sintering step that sinters the green compact. Further, the silicon powder in the raw material powder is 65 wt% or more relative to the whole of the raw material powder, and the crystallinity of the silicon nitride sintered body in the sintering step is 75-90%.

Further, the above-described one aspect of the second method may include one or more of the following features (1) to (5) .
(1) the mixing step mixes the raw material powder without a binder.
(2) the sintering step includes, in the process increasing the temperature within 1,000-1,200 °C to the sintering temperature, a step that increases the temperature at a temperature increasing rate of 15 °C/minute or less without keeping a specified temperature for more than one hour.
(3) the sintering temperature is a range of 1, 600-1, 900 °C.
(4) the sintering additive contains the rare earth oxide and the aluminum oxide, and the raw material powder contains 10-17.5 wt% of the rare earth oxide relative to the whole of the raw material powder and 10-17.5 wt% of the aluminum oxide relative to the whole of the raw material powder.
(5) the rare earth oxide includes one or more of Y₂O₃, CeO₂, Nd₂O₃, and Eu₂O₃.

For example, by compounding the rare earth oxide by 10-17.5 wt% and the aluminum oxide by 10-17.5 wt% as the sintering additive, into the raw material powder, the nitriding of the silicon and the sintering thereafter can be accelerated (the above-described feature (4)). Accelerating the nitriding of the silicon eliminates the need for keeping temperature of 1, 100-1,450 °C for a long time in the nitrogen atmosphere, which is normally performed, so that this method can improve the energy efficiency.

### Usage of silicon nitride sintered body

The usage of the silicon nitride sintered body of the first embodiment is not especially limited, but may be applied to a machine part because of its superior mechanical property or the like. The machine part is used in, for example, a rolling portion or a sliding portion. The machine part of the present invention uses the silicon nitride sintered body of the present invention in a portion or the whole of its configuration. Examples of the machine part include a sliding component, a bearing component, a roll material for rolling, a compressor vane, an engine component such as a gas turbine vane, and a cutting tool (cutting tip) . Examples of the bearing component include a raceway ring such as an inner ring and an outer ring, a bearing rolling element, and a retainer. The bearing of the present invention includes the machine part as a portion or the whole of the bearing component. Examples of the bearing of the present invention include a rolling bearing, a sliding bearing (a spherical bushing), a linear guide bearing, a ball bearing, and a linear bearing. In particular, the rolling bearing using the silicon nitride sintered body as a bearing rolling element is preferable as the bearing of the present invention.

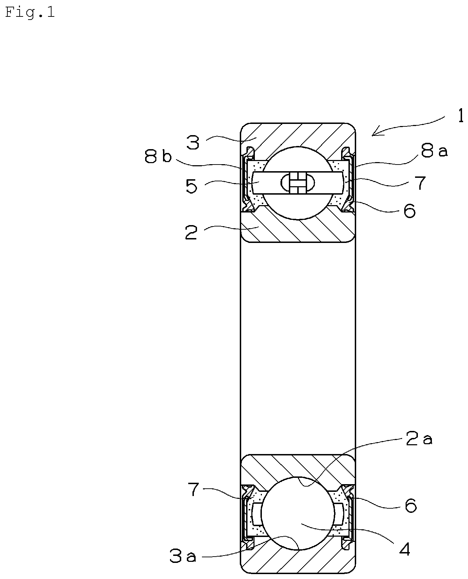

One example of a bearing of the first embodiment is described with reference to Fig. 1. Fig. 1 is a sectional view of a deep groove ball bearing. A rolling bearing 1 includes an inner ring 2 having an inner ring raceway surface 2a on an outer peripheral surface, an outer ring 3 having an outer ring raceway surface 3a on an inner peripheral surface, and a plurality of balls (rolling elements) 4 disposed between the inner ring raceway surface 2a and the outer ring raceway surface 3a. The inner ring 2 and the outer ring 3 are disposed coaxially to each other. The balls 4 are formed by the silicon nitride sintered body. The ball 4 is retained by a cage 5. Both openings 8a, 8b in an axial direction of the inner and outer rings are sealed by seal member 6, and a grease composition 7 is filled around at least the balls 4. The grease composition 7 is interposed between the balls 4 and the raceway surfaces to lubricate the balls 4. The type of the rolling bearing is not limited to the deep groove ball bearing, and thus an angular ball bearing or a thrust ball bearing may be also employed.

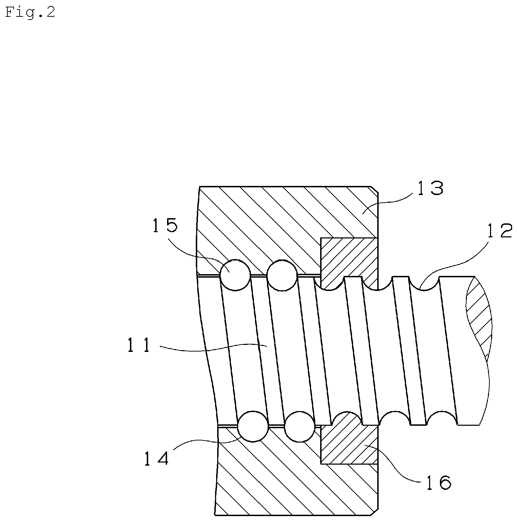

Other example of the bearing of the first embodiment is described with reference to Fig. 2. Fig. 2 is a sectional view of a ball screw. As shown in Fig. 2, the ball screw includes a screw shaft 11 serving as a guide member having a screw groove 12 formed on an outer peripheral surface, and a ball nut 13 having a screw groove 14 formed on an inner peripheral surface, and a plurality of balls 15 interposed between the screw groove 12 and the screw groove 14. A rotation of the screw shaft 11 (or the ball nut 13) is transmitted to the ball nut 13 (or the screw shaft 11) via the balls 15, so as to move the ball nut 13 in an axial direction. In the example shown in Fig. 2, the ball 15 is formed of the silicon nitride sintered body, and each of the screw shaft 11 and the ball nut 13 is formed of steel (for example, bearing steel, low carbon steel, etc.). A grease composition is filled around the balls 15 between the screw shaft 11 and the ball nut 13 and sealed by a ball screw seal member 16.

In the ball screw shown in Fig. 2, a circulation system for the ball is not especially limited, and thus any circulation system such as a tube system, a return tube (pipe) system, a deflector system, an end deflector system, an end cap system, and an internal deflector system may be employed. In each circulation system, a circulation path largely affects the smooth circulation of the ball.

The ball screw is specifically employed for converting a rotation of a motor into a linear motion. For example, the ball screw may be favorably applied to an electric actuator, a positioning device, an electric jack, a servo-cylinder, an electric servo-pressing machine, a mechanical pressing machine, an electric brake system, a transmission, an electric power steering system, and an electric injection molding device.

Here, wear resistance, toughness, and high load capacity are required to the ball screw. In recent years, a property for enduring a high load is further required due to downsizing, and hydrogen embrittlement caused by hydrogen that is generated from a lubricant due to sliding or a high load is also required to be suppressed. In the examples shown in Fig. 2, the above-described silicon nitride sintered body is employed in the ball, which easily satisfies these requirements, and also product lifetime of the ball is improved.

Also, in the ball screw, in a case in which misalignment due to a mounting error in mounting the ball screw is large, twist (namely, relative incline between the screw shaft and the nut) might be caused. When moment caused by the twist is applied to the ball screw, a load balance in the nut is decreased and contact surface pressure is partially increased, thereby the lifetime of the ball screw might be deteriorated. However, the above-described silicon nitride sintered body is employed as the ball, so that superior circulation performance of the ball is obtained and the deterioration of the lifetime is suppressed.

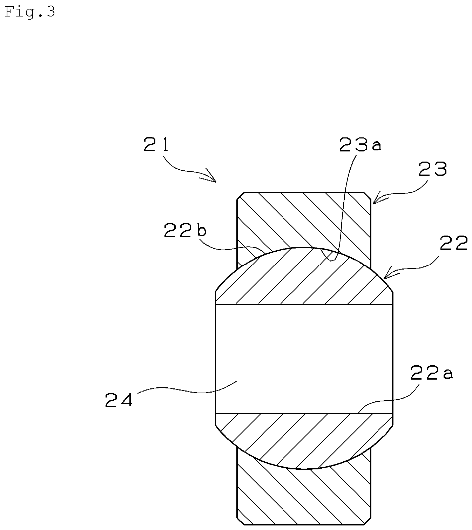

Further, another example of the bearing of the first embodiment is described with reference to Fig. 3. Fig. 3 is a sectional view showing one example of a spherical sliding bearing. As shown in Fig. 3, a spherical sliding bearing 21 includes an inner ring 22 that has a spherical outer peripheral surface 22b and an inner peripheral surface 22a having a bearing hole 24 into which a support shaft is inserted, and an outer ring 23 that has a recessed surface 23a that corresponds to the outer peripheral surface 22b. In the spherical sliding bearing 21, at least one of the inner ring 22 and the outer ring 23 is formed of the above-described silicon nitride sintered body. The material of the mating component is not especially limited, and thus metal material such as aluminum alloy, stainless steel and iron steel, synthetic resin material, or ceramics material other than the above-described silicon nitride sintered body may be employed.

The spherical sliding bearing is a self-aligning sliding bearing that has a spherical sliding portion that is capable of receiving a radial load and axial loads in both directions. The spherical sliding bearing is suitable for a swinging motion and an aligning motion, and thus is used in a joint portion of an industrial machine or a construction machine. Any of a non-oil supply type (see Fig. 3) or an oil supply type may be employed for the spherical sliding bearing. For example, in the oil supply type spherical sliding bearing, an oil hole and an oil groove are formed on each of the inner ring and the outer ring. Grease may be applied to a sliding surface in mounting the spherical sliding bearing.

Next, a second embodiment of the present invention is described.

### SECOND EMBODIMENT

### Silicon nitride bare ball

A silicon nitride bare ball of the second embodiment is a silicon nitride sintered body formed by sintering a spherical molded body obtained by pressure-molding a raw material containing a sintering additive or the like. In the present invention, the silicon nitride bare ball is a silicon nitride sintered body of which the surface is not polished after sintering. In the silicon nitride bare ball of the second embodiment, a ratio of the diameter variation to the mean diameter (diameter variation (µm) / mean diameter (mm) ) is 0.015 or less, preferably 0.012 or less, more preferably 0.010 or less, and especially preferably 0.005-0.010.

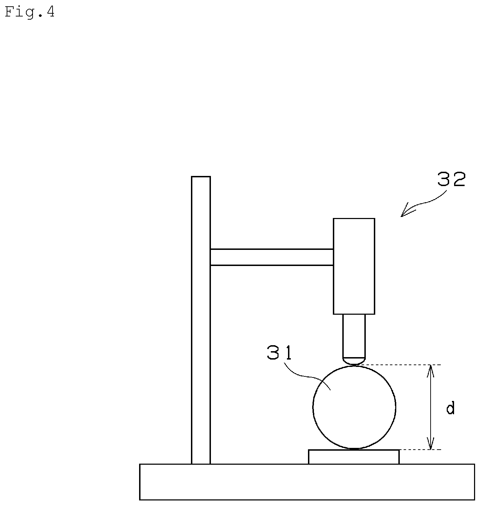

Here, the diameter of the silicon nitride bare ball is a distance between parallel two planes that contact with an actual surface of the silicon nitride bare ball, measured based on JIS B 1501. For example, as shown in Fig. 4, the diameter d of a silicon nitride bare ball 31 is measured by a dimension measure such as an electric micro meter 32. In the present invention, the mean diameter of the silicon nitride bare ball is the mean of the diameter d of the silicon nitride bare ball 31 measured 10 times at different points.

The diameter variation of the silicon nitride bare ball is a difference between the maximum and the minimum of the diameters of the silicon nitride bare ball, measured based on JIS B 1501. Specifically, the diameter variation is obtained from the difference between the maximum and the minimum in the measured result (10 times) of the diameters.

The mean diameter of the silicon nitride bare ball is not especially limited, and is preferably 5-100 mm, more preferably 5-50 mm. The diameter variation of the silicon nitride bare ball is preferably 20 µm or less, more preferably 15 µm or less, further more preferably 5-15 µm.

The silicon nitride bare ball contains a silicon nitride as a main component. An element of other component in the silicon nitride bare ball is not especially limited, however the silicon nitride bare ball preferably contains at least one of the rare earth element and the aluminum element, and more preferably contains both the rare earth element and the aluminum element.

Hereinafter, the silicon nitride bare ball that contains both the rare earth element and the aluminum element is described, however the silicon nitride bare ball that contains either one of the rare earth element and the aluminum element may be also employed as needed.

In the above-described silicon nitride bare ball, the content of the rare earth element is preferably 6-13 wt% in terms of oxide, relative to the total weight of the silicon nitride bare ball, and the content of the aluminum element is preferably 6-13 wt% in terms of oxide, relative to the total weight of the silicon nitride bare ball.

Examples of the rare earth element include yttrium (Y), lanthanum (La), cerium (Ce), samarium (Sm), neodymium (Nd), dysprosium (Dy), europium (Eu), and erbium (Er) . Of these rare earth elements, yttrium (Y), cerium (Ce), neodymium (Nd), and europium (Eu) are preferable. In particular, cerium (Ce) is more preferable because cerium (Ce) accelerates nitriding of the silicon metal and improves producing efficiency.

The content of the rare earth element is preferably 6.5 wt% or more, may be 7 wt% or more. The content of the rare earth element may be 12 wt% or less, or 11 wt% or less.

The rare earth element is derived from, for example, a sintering additive containing a rare earth element (normally, an oxide of a rare earth element) employed when the silicon nitride bare ball is produced. With the content of the rare earth element in the silicon nitride bare ball within the above-described range, for example, in a case in which the silicon nitride bare ball is produced by the PS-RBSN method, the nitriding reaction of the silicon powder (silicon metal powder), which is a raw material, is accelerated and the sintering thereafter is also accelerated. Also, the dense sintered body can be produced at a relatively low temperature, and thus volatilization of the silicon nitride caused at a high temperature can be suppressed. The PS-RBSN method is a two-step sintering method including a silicon nitriding step and a sintering step thereafter. The content of the rare earth element may be adjusted based on the compounding amount of the sintering additive containing the rare earth element (for example, the oxide of the rare earth element) compounded to the raw material.

The content of the aluminum element is preferably 6.5 wt% or more, more preferably 7 wt% or more. The content of the aluminum element may be 12 wt% or less, or 11 wt% or less. The content of the aluminum element (in terms of oxide) may be within ± 5 wt%, ± 2 wt%, or ± 1 wt% of the content of the rare earth element (in terms of oxide), or alternatively the content of the aluminum element may be equal to the content of the rare earth element.

The aluminum element is derived from, for example, a sintering additive containing an aluminum element (normally, an aluminum oxide) employed when the silicon nitride bare ball is produced. With the content of the aluminum element in the silicon nitride bare ball within the above-described range, in a case in which, for example, the silicon nitride bare ball is produced by the PS-RBSN method, the sintering is accelerated and the sintering can be performed at a relatively low temperature. The content of the aluminum element may be adjusted based on a compounding amount of the sintering additive containing the aluminum element (for example, the aluminum oxide) compounded to the raw material.

The silicon nitride bare ball of the second embodiment preferably includes an inclusion (I) in a surface layer portion which is a region within 2 mm from the surface of the silicon nitride sintered body. The inclusion (I) contains a component of element other than the silicon nitride. Examples of the inclusion (I) include an inclusion containing a transition metal element (It), and an inclusion containing a non-nitrided silicon element (Is). The inclusion (It) preferably contains a silicide of a transition metal element. The inclusion (Is) is, for example, an agglomerate of a non-nitrided silicon element. The inclusion (I) preferably contains the inclusion (It) and does not contain the inclusion (Is) or a content rate of the inclusion (Is) is small. The inclusion means that the whole portion thereof exists in the surface layer portion which is a region within 2 mm from the surface of the silicon nitride bare ball.

The inclusion (It) is derived from, for example, the sintering additive containing the transition metal element (normally, an oxide of the transition metal element) employed when the silicon nitride bare ball is produced. For example, the silicide of the transition metal element is formed when the silicon nitride bare ball is produced. In a case in which the silicon nitride bare ball is produced by the PS-RBSN method, the nitriding of the silicon powder can be accelerated and further the growing of an acicular crystal of the silicon nitride can be accelerated by employing the sintering additive containing the transition metal element. Thus, thermal treatment time required for the nitriding of the silicon can be reduced, and the energy efficiency in producing the silicon nitride bare ball can be improved.

In a case in which the silicon nitride powder is contained in the raw material for producing the silicon nitride bare ball, when the silicon nitride powder and the sintering additive containing the transition metal element such as chromium oxide (Cr₂O₃) (the oxide of the transition metal element) are mixed, the sintering additive causes the oxidation of the silicon nitride powder, so that the composition of the raw material is changed and thus the favorable sintering might not be caused. However, in a case in which the silicon nitride sintered body is produced by the PS-RBSN method, the silicon powder is mainly employed as the raw material, and thus the content of the silicon nitride powder in the raw material can be reduced. As a result, the above-described disadvantage is hardly caused, and thus a dense silicon nitride bare ball can be obtained.

When the silicon nitride bare ball is produced by the PS-RBSN method, in a case in which the nitriding of the silicon powder (silicon metal powder), which is a raw material, is insufficient, the inclusion (Is) might be formed. In a case in which the inclusion (Is) having a large diameter is formed or the rate of the inclusion (Is) is increased in the surface layer portion, the mechanical property such as the fracture toughness of the silicon nitride bare ball is deteriorated, and the lifetime of a product into which the silicon nitride bare ball is processed is deteriorated. It is preferable that an amount of the inclusion (Is) in the surface layer portion of the silicon nitride bare ball is small, and thus no inclusion (Is) is more preferable.

The transition metal element is not especially limited as long as the transition metal element is any element that belongs to the groups 3 to 11 in the IUPAC periodic table. The transition metal element is preferably one or more of Ti, Cr, and Mn. The transition metal element more preferably contains Cr. The transition metal element containing Cr can further improve the fracture toughness of the silicon nitride bare ball.

The content of the transition metal element in the silicon nitride bare ball may be preferably 0.1 wt% or more, more preferably 0.3 wt% or more, or 0.5 wt% or more in terms of oxide, relative to the total weight of the silicon nitride bare ball. In addition, the content of the transition metal element in the silicon nitride bare ball may be normally 5 wt% or less, 3 wt% or less, preferably 2 wt% or less, or 1 wt% or less in terms of oxide, relative to the total weight of the silicon nitride bare ball. The above-described content of the transition metal element is determined by the similar method that determines the content of each of the rare earth element and the aluminum element.

The maximum diameter of the inclusion (I) in the surface layer portion of the silicon nitride bare ball is not especially limited. Specifically, the maximum diameter of the inclusion (I) may be 50 µm or less, 40 µm or less, 30 µm or less, or 25 µm or less, and normally 0.5 µm or more. The maximum diameter of the inclusion (I) in the surface layer portion means a diameter of the inclusion (I) having the largest diameter among the inclusions (I) in the surface layer portion. With the maximum diameter of the inclusion (I) within the above-described range, the inclusion (I) is prevented from being an origin of fracture, so that the silicon nitride bare ball having superior fracture toughness can be easily obtained. Further, with the maximum diameter of the inclusion (I) within the above-described range, the particle shedding of the inclusion from the silicon nitride bare ball, which leads to the defect, can be suppressed, and thus superior lifetime of a product such as a rolling element of a bearing, into which the silicon nitride bare ball is processed can be easily obtained. The maximum diameter of the inclusion (I) is adjusted based on, for example, a degree of the nitriding of the silicon powder as a raw material, a compounding amount and/or a particle diameter of the sintering additive containing the transition metal element added to the raw material, and the kind of the transition metal.

In a section of the silicon nitride bare ball, a ratio of a total sectional area of the inclusion (I) to a total sectional area of the surface layer portion ((the total sectional area of the inclusion (I)) / (the total sectional area of the surface layer portion) × 100) may be preferably 0.05% or more, 0.1% or more, 0.15% or more, 0.3% or more, or 0.6% or more. The above-described ratio may be normally 7.0% or less, 3. 0% or less, 2. 0% or less, or 1.5% or less. The above-described ratio of the inclusion (I) is a ratio of the total sectional area that is the sum of the sectional area of all inclusions in the surface layer portion, to the total sectional area of the surface layer portion. With the above-described ratio within the above-described range, the silicon nitride bare ball having superior fracture toughness and superior lifetime of a product into which the silicon nitride sintered body is processed can be easily obtained. In a case in which the ratio is too large, the particle shedding of the inclusion is continuously caused, which may affect the result of the bearing lifetime test. The ratio of the inclusion (I) is adjusted based on, for example, a degree of the nitriding of the silicon powder as a raw material, a compounding amount and/or a particle diameter of the sintering additive containing the transition metal element added to the raw material, and the kind of the transition metal.

The silicon nitride bare ball of the second embodiment preferably has a pore in the surface layer portion which is a region within 2 mm from the surface of the silicon nitride bare ball. The maximum diameter of the pore in the section of the silicon nitride bare ball is preferably 50 µm or less. The maximum diameter of the pore may be 40 µm or less, 30 µm or less, or 25 µm or less, or alternatively the silicon nitride sintered body need not have a pore. With the maximum diameter of the pore within the above-described range, when the silicon nitride bare ball is processed into a product such as a rolling element of a bearing, superior lifetime of the product can be easily obtained. The pore in the surface layer portion means a pore existing in the surface layer portion which is a region within 2 mm from the surface of the silicon nitride bare ball, specifically the whole portion of the pore existing in the surface layer portion. The maximum diameter of the pore in the surface layer portion means a diameter of the pore having the largest diameter among the pores in the surface layer portion. The maximum diameter of the pore is adjusted, for example, by adjusting a content of the silicon nitride employed as a raw material and/or a compounding amount of the sintering additive when the silicon nitride bare ball is produced by the PS-RBSN method.

The maximum diameter of the inclusion (I), the ratio of the inclusion (I), and the maximum diameter of the pore are defined by measuring the inclusion (I) and the pore, the all portion thereof existing within the surface layer portion on a section of a test piece produced by a method described in the following example. The maximum diameter of the inclusion (I), the ratio of the inclusion (I), and the maximum diameter of the pore are calculated by a method described in the following example.

An especially preferable silicon nitride bare ball of the second embodiment is the silicon nitride sintered body that has (diameter variation (µm) / mean diameter (mm) ) of 0.015 or less and contains the rare earth element and the aluminum element. The silicon nitride bare ball has an inclusion (I) and a pore in a surface layer portion which is a region within 2 mm from the surface of the silicon nitride bare ball. The content of the rare earth element is 6-13 wt% in terms of oxide relative to the total weight of the silicon nitride bare ball. The content of the aluminum element is 6-13 wt% in terms of oxide relative to the total weight of the silicon nitride bare ball. The maximum diameter of the inclusion (I) in the surface layer portion is 50 µm or less. In a section of the silicon nitride bare ball, a ratio of a total sectional area of the inclusion (I) to a total sectional area of the surface layer portion is 0.1% or more. The maximum diameter of the pore in the surface layer portion is 50 µm or less. The above-described element and the above-described numeral range may be appropriately applied to this configuration.

### Producing the silicon nitride bare ball

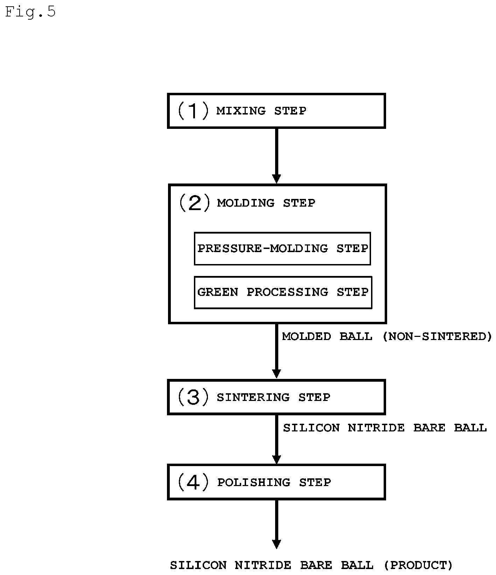

The silicon nitride bare ball is preferably produced by, for example, the PS-RBSN method (a two-step sintering method) . Fig. 5 shows one example of a general flowchart of the producing method.

As shown in Fig. 5, the producing method of the silicon nitride bare ball includes (1) a mixing step that mixes the raw material powder containing the silicon powder and the sintering additive, (2) a molding step that molds the mixed powder into a spherical molded ball, and (3) a sintering step that sinters the molded ball. In addition, (4) a polishing step is performed as needed after the sintering, thereby the silicon nitride bare ball is produced as a product. The silicon nitride bare ball of the present invention may be finished as needed without polishing.

### (1) Mixing step

In the mixing step, for example, the raw material powder is mixed in a dry manner without using water and an organic solvent. In this case, it is preferable that the raw material powder is mixed without using a binder. The particle diameter of the powder after mixing is not especially limited, however D90 is preferably 10-100 µm, more preferably 10-50 µm. Further, D50 is preferably 2-10 µm, more preferably 3-9 µm. With D90 and/or D50 within the above-described ranges, superior flowability and moldability can be shown and thus a dense silicon nitride bare ball can be obtained. D50 and D90 denote a 50% cumulative particle diameter and a 90% cumulative particle diameter, respectively, and are measured by a laser diffraction particle size analyzer.

In the mixing step, wet granulating may be performed to form granulated powder as the mixed powder. In this case, the raw material powder and a binder are mixed in water and/or an organic solvent (for example, ethanol) to form slurry and then the slurry is spray-granulated and dried using a spray dry to form a granulated powder. An organic binder may be employed as the binder. For example, 1-10 wt% of the binder relative to the whole of the raw material powder is compounded.

### (2) Molding step

In the molding step, the mixed powder obtained in the mixing step is molded into a spherical molded ball. The molding step includes for example, a pressure-molding step and a green processing step as shown in Fig. 5. In this case, a spherical green compact is formed by a press molding such as a cold isostatic pressing, and then the green compact is processed into a green ball using a green processing device.

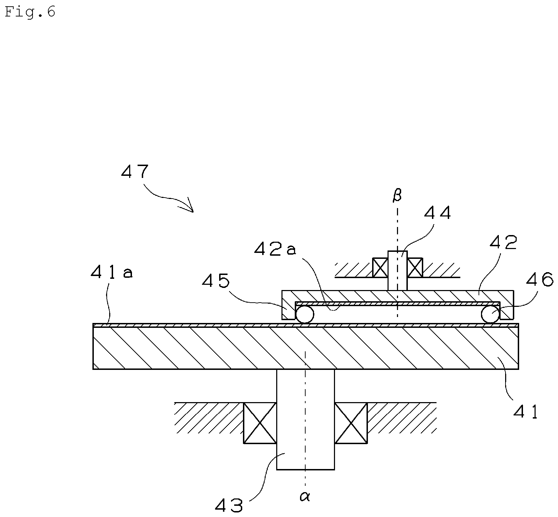

Fig. 6 shows a general structure of the green processing device for performing the green processing step. As shown in Fig. 6, a green processing device 47 includes a disc-like first surface plate 41 having a first surface, and a disc-like second surface plate 42 having a second surface that faces the first surface in a parallel manner. The first surface plate 41 is located below the second surface plate 42.

The first surface plate 41 is coupled to a first shaft 43 to rotate in a circumferential direction around a center axis α of the first shaft 43 as a rotational axis. A processing layer 41a for processing a spherical green compact 46 is formed in a region including the first surface of the first surface plate 41. A grindstone or a wire net is employed in the processing layer 41a. The second surface plate 42 is coupled to a second shaft 44 to rotate in a circumferential direction around a center axis β of the second shaft 44 as a rotational axis. The center axis α is parallel to and offset from the center axis β. A holding layer 42a for holding the green compact 46 is formed in a region including the second surface of the second surface plate 42. The holding layer 42a is an elastic member formed of rubber or synthetic resin. A holding portion 45 that protrudes toward the first surface plate 41 is formed in the second surface plate 42 to surround an outer periphery of the second surface plate 42.

In the green processing device 47, when the second surface plate 42 is rotated in a state in which many green compacts 46 are interposed between the first surface plate 41 and the second surface plate 42, the green compact 46 revolves on the inner periphery of the holding portion 45 of the second surface plate 42 while rotating due to the centrifugal force. Thereafter, the first surface plate 41 is rotated in the same direction as the second surface plate 42 so as not to interrupt the revolving of the green compact 46. When the upper and lower surface plates 41, 42 rotate, the green compact 46 revolves on the inner periphery of the holding portion 45 of the second surface plate 42 while rotating in any direction. A downward force is applied to the second surface plate 42, thereby the green compact 46 is processed by the processing layer 41a of the first surface plate 41. Thus, a green ball close to the true sphere can be obtained. In the flowchart shown in Fig. 5, the obtained green ball is referred to as a molded ball.

### (3) Sintering step

The sintering step includes a first step that nitrides the obtained green ball by applying a thermal treatment, for example, in a nitrogen atmosphere at a temperature of 1,200-1,500 °C, and a second step that sinters the green ball by applying a thermal treatment, for example, in a nitrogen atmosphere at a temperature of 1,600-1,950 °C (preferably 1, 600-1, 800 °C, more preferably 1, 650-1, 750 °C) . In the first step, from a viewpoint of the producing efficiency, it is preferable that the temperature within 1,200-1,500 °C is not kept for one hour or more. In this description, the manner of "temperature is kept (temperature keeping)" means that the temperature is kept at a specified temperature for a certain time. Specifically, it is preferable that the nitriding is performed while increasing the temperature from, for example, approximately 1,100 °C to a sintering temperature of the second step at a specified temperature increasing rate. The temperature increasing rate may be, for example, 2.0 °C/minute or more, 2.5 °C/minute or more, or 5.0 °C/minute or more. The temperature increasing rate is, for example, 20 °C/minute or less, preferably 15 °C/minute or less. The silicon nitride bare ball of the second embodiment is obtained after the sintering step.

In producing the silicon nitride bare ball, from a viewpoint of dimensional accuracy of the silicon nitride bare ball, it is preferable that all steps of the PS-RBSN method are performed in a dry manner. In a case in which the silicon nitride bare ball is produced by the PS-RBSN method without using the organic binder, the shrinkage caused by the sintering can be reduced and thus the dimensional accuracy of the sintered body can be improved. Thus, the shape close to the true sphere obtained by the green processing or the like can be maintained after the sintering. In a case in which the organic binder is used for granulating particles, the degreasing step is necessary thereafter. However, in such a case, a cavity is caused after the organic binder is removed in the degreasing step, and thus the shrinkage caused by the sintering might be increased.

In the silicon nitride bare ball produced by the PS-RBSN method, a relative density of the green compact is increased after the nitriding, so that a shrinkage rate of the silicon nitride bare ball produced by the PS-RBSN method is smaller than that of the sintered body produced from the silicon nitride powder as a raw material. The shrinkage rate is calculated from the following formula. The non-sintered molded ball in the following formula is a green ball when the green processing step is performed as shown in Fig. 5. Shrinkage rate (%) = ((diameter of non-sintered molded ball) - (diameter of bare ball)/(diameter of non-sintered molded ball) × 100

The shrinkage rate of the silicon nitride bare ball of the second embodiment is not especially limited, however it may be preferably 11.0% or less. The shrinkage rate may be, for example, 7.0% or more, or 8.0% or more.

In the producing method of the silicon nitride bare ball, the sintering additive employed in the raw material powder is preferably a sintering additive containing the rare earth element, the aluminum element, and the transition metal element, and more preferably a sintering additive containing the oxide of the rare earth element, the aluminum element, and the transition metal element. The sintering additive containing the rare earth element preferably contains any one of Y₂O₃, CeO₂, Nd₂O₃, and Eu₂O₃. The sintering additive containing the transition metal element preferably contains any one of Cr₂O₃, TiO₂, MnO, and Fe₂O₃, more preferably any one of Cr₂O₃, TiO₂, and MnO, and further more preferably Cr₂O₃.

The raw material powder may contain, in addition to the silicon powder and the sintering additive, the silicon nitride powder and/or the organic binder, and the sintering additive containing an element other than the rare earth element, the aluminum element and the transition metal element.

The content of the silicon powder in the raw material powder is preferably 45 wt% or more, more preferably 50 wt% or more, further more preferably 55 wt% or more, or 60 wt% or more, relative to the total weight of the silicon powder, the silicon nitride powder and the sintering additive. The content of the silicon powder in the raw material may be normally 90 wt% or less, 85 wt% or less, or 80 wt% or less. The content of the silicon nitride powder in the raw material powder is normally 30 wt% or less, preferably 25 wt% or less, more preferably 20 wt% or less, or 15 wt% or less, relative to the above-described total weight. However, the raw material powder need not necessarily contain the silicon nitride powder.

The content of the sintering additive containing the rare earth element (for example, the oxide of the rare earth element) in the raw material powder is 7 wt% or more, preferably 9 wt% or more, more preferably 9.5 wt% or more, or 10 wt% or more, relative to the above-described total weight. The content of the rare earth element may be 17 wt% or less, 15 wt% or less, or 14.5 wt% or less. The content of the sintering additive containing the aluminum element (for example, the aluminum oxide) in the raw material powder is 5 wt% or more, preferably 9 wt% or more, more preferably 9.5 wt% or more, or 10 wt% or more, relative to the above-described total weight. The content of the aluminum element may be 17 wt% or less, 15 wt% or less, or 14.5 wt% or less. The content of the sintering additive containing the transition metal element (for example, the oxide of the transition metal element) in the raw material powder is preferably normally 0.1 wt% or more, more preferably 0.5 wt% or more, and normally 5 wt% or less, preferably 3 wt% or less. In a case in which the content of the sintering additive in the raw material powder is less, the dense silicon nitride bare ball is hardly obtained. In a case in which the content of the sintering additive in the raw material is much, the mechanical property such as the fracture toughness of the silicon nitride bare ball is deteriorated.

The mean particle diameter of the silicon powder in the raw material powder may be, for example, 5 µm or less. The mean particle diameter of the silicon nitride may be, for example, 0.5 µm or less. The mean particle diameter of the sintering additive may be normally 10 µm or less, 7 µm or less, 5 µm or less, 3 µm or less, 2 µm or less, 1 µm or less, or 0.4 µm or less, depending on the kind of the sintering additive.

As shown in Fig. 5, the silicon nitride bare ball of the second embodiment is polished in the following (4) polishing step so as to fulfill the specified product specification such as the diameter variation, the sphericity, and the arithmetic mean roughness, so that the silicon nitride bare ball is obtained.

The usage of the obtained silicon nitride bare ball is not especially limited, but may be applied to a rolling element of a rolling bearing and a rolling element of a ball screw. For example, the ball 4 of the rolling bearing 1 shown in Fig. 1, or the ball 15 of the ball screw shown in Fig. 2 may employ the silicon nitride bare ball of the second embodiment that is subjected to the polishing treatment.

### EXAMPLE

Hereinafter, the present invention is specifically described with reference to Test Examples, however the present invention is not limited to Test Examples.

### <Test Example A>

### Test Examples A1 to A9

The raw material powder having each compound rate shown in Table 2 was prepared. The raw material powder and a silicon nitride ball as medium were dry-mixed for 48 hours using a ball mill at a rotation speed of 200 rpm. As a result of the dry-mixing, the mixed powder was obtained. The material employed for forming the mixed powder is shown in Table 1. The manufacturer of all materials is Kojundo Chemical Lab. Co., Ltd. The mean particle diameter is a 50% cumulative particle diameter measured by a laser diffraction particle size analyzer.

**Table 1**

| Material | Manufacturer | Purity (%) | Mean particle diameter (µm) |
|---|---|---|---|
| Si | Kojundo Chemical Lab. Co., Ltd. | > 99.9 | ~ 5 |
| Al₂O₃ | Kojundo Chemical Lab. Co., Ltd. | > 99.9 | ~ 1 |
| Y₂O₃ | Kojundo Chemical Lab. Co., Ltd. | > 99.9 | ~ 0.4 |
| CeO₂ | Kojundo Chemical Lab. Co., Ltd. | > 99.0 | ~ 7 |
| Nd₂O₃ | Kojundo Chemical Lab. Co., Ltd. | > 99.9 | ~ 7 |
| Eu₂O₃ | Kojundo Chemical Lab. Co., Ltd. | > 99.9 | ~ 5 |

**Table 2**

| | Composition of raw material | | | |
|---|---|---|---|---|
| | Si | Rare earth oxide | | Al₂O₃ |
| | Content (wt%) | Kind | Content (wt%) | Content (wt%) |
| Example A1 | 85 | Y₂O₃ | 7.5 | 7.5 |
| Example A2 | 80 | Y₂O₃ | 10 | 10 |
| Example A3 | 75 | Y₂O₃ | 12.5 | 12.5 |
| Example A4 | 70 | Y₂O₃ | 15 | 15 |
| Example A5 | 65 | Y₂O₃ | 17.5 | 17.5 |
| Example A6 | 60 | Y₂O₃ | 20 | 20 |
| Example A7 | 75 | CeO₂ | 12.5 | 12.5 |
| Example A8 | 75 | Nd₂O₃ | 12.5 | 12.5 |
| Example A9 | 75 | Eu₂O₃ | 12.5 | 12.5 |

The obtained mixed powder was molded into a spherical green compact having a diameter of 11 mm by the cold isostatic pressing method using a rubber mold. The green compact was put in a nitrogen atmosphere (pressure of 0.9 MPa), and the temperature was increased from 1,550 °C to 1,800 °C at a temperature increasing rate of 2.5 °C/minute. And then the temperature of 1,800 °C was kept for 4 hours, so that a silicon nitride sintered body was formed.

Table 3 shows the composition rate of the oxides in the obtained silicon nitride sintered body calculated from the composition rate of the raw material powder based on a calculation condition that: the whole of the silicon (silicon metal) in the raw material powder is nitrided; and the weight of the silicon nitride is 1.67 times as large as the weight of the silicon.

**Table 3**

| | Composition of silicon nitride sintered body | | |
|---|---|---|---|
| | Si₃N₄ | Rare earth element | Aluminum element |
| | Content (wt%) | Content (wt%) (in terms of oxide) | Content (wt%) (in terms of oxide) |
| Example A1 | 90.4 | 4.8 | 4.8 |
| Example A2 | 87.0 | 6.5 | 6.5 |
| Example A3 | 83.4 | 8.3 | 8.3 |
| Example A4 | 79.6 | 10.2 | 10.2 |
| Example A5 | 75.6 | 12.2 | 12.2 |
| Example A6 | 71.4 | 14.3 | 14.3 |
| Example A7 | 83.4 | 8.3 | 8.3 |
| Example A8 | 83.4 | 8.3 | 8.3 |
| Example A9 | 83.4 | 8.3 | 8.3 |

The obtained spherical silicon nitride sintered body was polished to a sphere G5 based on JIS B 1563, and a spherical test piece having 3/8 inches (diameter of 9.525 mm) was formed. Calculation of crystallinity

The crystallinity of the silicon nitride sintered body is calculated by the following formula based on the above-described XRD diffraction pattern of a mirror-polished cutting face. Crystallinity (%) = Peak area of crystalline phase/(Peak area of crystalline phase + Peak area of amorphous phase) × 100

### Measurement of maximum diameter of inclusion (I) and measurement of maximum diameter of pore

Each of the test pieces of Test Examples A1 to A9 was cut on a section passing the center thereof, and the cutting face was mirror-polished. The mirror-polished cutting face was photographed using VHX5000 produced by KEYENCE CORPORATION, and the photographed image was analyzed using WinRoof produced by MITANI CORPORATION, so that the maximum diameter of the inclusion (I) and the maximum diameter of a pore in the surface layer portion that is a region within 2 mm from the surface of the spherical test piece were measured. The diameter of each of the inclusion (I) and the pore was calculated as a square root of an enveloped area of each of the inclusion (I) and the pore (diameter of inclusion (I) or pore = √(enveloped area of inclusion (I) or pore)). The test piece with no inclusion (I) having a diameter of more than 50 µm in the surface layer portion is evaluated as "A", and the test piece with the inclusion (I) having a diameter of more than 50 µm in the surface layer portion is evaluated as "B". Further, the test piece with no pore having a diameter of more than 50 µm in the surface layer portion is evaluated as "A", and the test piece with the pore having a diameter of more than 50 µm in the surface layer portion is evaluated as "B". The inclusion (I) of which the whole portion exists in the surface layer portion and the pore of which the whole portion exists in the surface layer portion are targets to be measured. The result is shown in Table 4.

### Rolling fatigue test

A rolling fatigue test was executed on the test piece of each of Test Examples 1 to 9 using 6206 produced by NTN CORPORATION as a bearing outer ring, a bearing inner ring, and a cage. The rolling fatigue test was executed for test time of 168 hours at a rotation speed of 3,000 rpm and a load of 1.5 GPa, and the product lifetime was evaluated. As the lubrication oil, additive-free turbine oil VG56 produced by JXTG ENERGY CORPORATION is employed. The test piece in which the flaking is not caused during the test time is evaluated as "a", and the test piece in which the flaking is caused is evaluated as "b". The result is shown in Table 4.

**Table 4**

| | Crystallinity (%) | Maximum diameter of inclusion (I) (µm) | Maximum diameter of pore (µm) | Rolling fatigue test |
|---|---|---|---|---|
| Example A1 | 91 | B | A | b |
| Example A2 | 88 | A | A | a |
| Example A3 | 81 | A | A | a |
| Example A4 | 78 | A | A | a |
| Example A5 | 75 | A | A | a |
| Example A6 | 71 | A | A | b |
| Example A7 | 85 | A | A | a |
| Example A8 | 88 | A | A | a |
| Example A9 | 89 | A | A | a |

As the result of evaluation, Test Examples A2 to A5 and A7 to A9 each of which the crystallinity is 75-90% results in "a" in the rolling fatigue test, which is superior in flaking resistance. Each of Test Examples A2 to A5 and A7 to A9 results in "A" in the maximum diameter of the inclusion and the maximum diameter of the pore, which does not have the inclusion (I) having a diameter of more than 50 µm and the pore having a diameter of more than 50 µm in the surface layer portion. In each of Test Example A1 (the crystallinity of 91%) and Test Example A6 (the crystallinity of 71%), the flaking was caused in the rolling fatigue test. Test Example A6 results in "A" in the maximum diameter of the inclusion and the maximum diameter of the pore. According to this result, it is considered that the silicon nitride sintered body of each of Test Examples A2 to A5 and A7 to A9 imparts superior lifetime to a product into which the silicon nitride sintered body is processed.

### <Test Example B>

### Test Examples B1 to B26

The raw material powder having each compound rate shown in Table 6 was prepared. The raw material powder and a silicon nitride ball as medium were dry-mixed for 48 hours using a ball mill at a rotation speed of 200 rpm. The material employed for forming the mixed powder is shown in Table 5. The obtained mixed powder was molded into a spherical green compact having a diameter of 13 mm by the cold isostatic pressing method using a rubber mold. The green compact was subjected to the green processing using a green processing device shown in Fig. 6, so that a green ball having a diameter of 12 mm and the diameter variation of 20 µm or less was formed. The green ball was put in a nitrogen atmosphere (pressure of 0.9 MPa), and the temperature was increased from the room temperature to a temperature of 1,550-1,900 °C at a temperature increasing rate of 2.5-20 °C/minute as shown in Table 6. And then the sintering temperature was kept for 4 hours, so that a silicon nitride bare ball was formed.

**Table 5**

| Material | Purity (%) | Mean particle diameter (µm) |
|---|---|---|
| Si | > 99.9 | ∼ 5 |
| Al₂O₃ | > 99.9 | ∼ 1 |
| Y₂O₃ | > 99.9 | ~ 0.4 |
| CeO₂ | > 99.0 | ∼ 7 |
| Nd₂O₃ | > 99.9 | ∼ 7 |
| Eu₂O₃ | > 99.9 | ∼ 5 |
| Cr₂O₃ | > 99.9 | ∼ 3 |
| TiO₂ | > 99.9 | ∼ 2 |
| MnO | > 99.9 | ∼ 5 |
| Fe₂O₃ | > 99.9 | ∼ 1 |

**Table 6**

| | Composition of raw material | | | | | | Sintering condition | |
|---|---|---|---|---|---|---|---|---|
| | Si | Rare earth oxide | | Al₂O₃ | Transition metal oxide | | Sintering temperature (°C) | Temperature increasing rate (°C/minute) |
| | Content (wt%) | Kind | Content (wt%) | Content (wt%) | Kind | Content (wt%) | | |
| Example B1 | 85 | Y₂O₃ | 7 | 7 | Cr₂O₃ | 1 | 1,700 | 2.5 |
| Example B2 | 80 | Y₂O₃ | 9.5 | 9.5 | Cr₂O₃ | 1 | 1,700 | 2.5 |
| Example B3 | 70 | Y₂O₃ | 14.5 | 14.5 | Cr₂O₃ | 1 | 1,700 | 2.5 |
| Example B4 | 65 | Y₂O₃ | 17 | 17 | Cr₂O₃ | 1 | 1,700 | 2.5 |
| Example B5 | 60 | Y₂O₃ | 19.5 | 19.5 | Cr₂O₃ | 1 | 1,700 | 2.5 |
| Example B6 | 75 | Y₂O₃ | 12 | 12 | TiO₂ | 1 | 1,700 | 2.5 |
| Example B7 | 75 | Y₂O₃ | 12 | 12 | MnO | 1 | 1,700 | 2.5 |
| Example B8 | 75 | Y₂O₃ | 12 | 12 | Fe₂O₃ | 1 | 1,700 | 2.5 |
| Example B9 | 75 | CeO₂ | 12 | 12 | Cr₂O₃ | 1 | 1,700 | 2.5 |
| Example B10 | 75 | Nd₂O₃ | 12 | 12 | Cr₂O₃ | 1 | 1,700 | 2.5 |
| Example B11 | 75 | Eu₂O₃ | 12 | 12 | Cr₂O₃ | 1 | 1,700 | 2.5 |
| Example B12 | 70 | Y₂O₃ | 15 | 15 | - | | 1,700 | 2.5 |
| Example B13 | 70 | Y₂O₃ | 14.95 | 14.95 | Cr₂O₃ | 0.1 | 1,700 | 2.5 |
| Example B14 | 70 | Y₂O₃ | 12.5 | 12.5 | Cr₂O₃ | 5 | 1,700 | 2.5 |
| Example B15 | 70 | Y₂O₃ | 10 | 10 | Cr₂O₃ | 10 | 1,700 | 2.5 |
| Example B16 | 75 | Y₂O₃ | 12 | 12 | Cr₂O₃ | 1 | 1,550 | 2.5 |
| Example B17 | 75 | Y₂O₃ | 12 | 12 | Cr₂O₃ | 1 | 1,600 | 2.5 |
| Example B18 | 75 | Y₂O₃ | 12 | 12 | Cr₂O₃ | 1 | 1,800 | 2.5 |
| Example B19 | 75 | Y₂O₃ | 12 | 12 | Cr₂O₃ | 1 | 1,900 | 2.5 |
| Example B20 | 75 | Y₂O₃ | 12 | 12 | Cr₂O₃ | 1 | 1,700 | 5.0 |
| Example B21 | 75 | Y₂O₃ | 12 | 12 | Cr₂O₃ | 1 | 1,700 | 10.0 |
| Example B22 | 75 | Y₂O₃ | 12 | 12 | Cr₂O₃ | 1 | 1,700 | 15.0 |
| Example B23 | 75 | Y₂O₃ | 12 | 12 | Cr₂O₃ | 1 | 1,700 | 20.0 |
| Example B24 | 75 | CeO₂ | 12 | 12 | Cr₂O₃ | 1 | 1,700 | 20.0 |
| Example B25 | 75 | Nd₂O₃ | 12 | 12 | Cr₂O₃ | 1 | 1,700 | 20.0 |
| Example B26 | 75 | Eu₂O₃ | 12 | 12 | Cr₂O₃ | 1 | 1,700 | 20.0 |

Table 7 shows the composition rate of the oxides in the obtained silicon nitride bare ball calculated from the composition rate of the raw material powder based on a calculation condition that: the whole of the silicon (silicon metal) in the raw material powder is nitrided; and the weight of the silicon nitride is 1.67 times as large as the weight of the silicon.

**Table 7**

| | Composition of silicon nitride bare ball | | | |
|---|---|---|---|---|
| | Si₃N₄ | Rare earth element | Aluminum element | Transition metal |
| | Content (wt%) | Content (wt%) (in terms of oxide) | Content (wt%) (in terms of oxide) | Content (wt%) (in terms of oxide) |
| Example B1 | 90.4 | 4.46 | 4.46 | 0.64 |
| Example B2 | 87.0 | 6.18 | 6.18 | 0.65 |
| Example B3 | 79.6 | 9.87 | 9.87 | 0.68 |
| Example B4 | 75.6 | 11.84 | 11.84 | 0.70 |
| Example B5 | 71.5 | 13.91 | 13.91 | 0.71 |
| Example B6 | 83.4 | 7.99 | 7.99 | 0.67 |
| Example B7 | 83.4 | 7.99 | 7.99 | 0.67 |
| Example B8 | 83.4 | 7.99 | 7.99 | 0.67 |
| Example B9 | 83.4 | 7.99 | 7.99 | 0.67 |
| Example B10 | 83.4 | 7.99 | 7.99 | 0.67 |
| Example B11 | 83.4 | 7.99 | 7.99 | 0.67 |
| Example B12 | 79.6 | 10.21 | 10.21 | - |
| Example B13 | 79.6 | 10.18 | 10.18 | 0.07 |
| Example B14 | 79.6 | 8.51 | 8.51 | 3.40 |
| Example B15 | 79.6 | 6.81 | 6.81 | 6.81 |
| Example B16 | 83.4 | 7.99 | 7.99 | 0.67 |
| Example B17 | 83.4 | 7.99 | 7.99 | 0.67 |
| Example B18 | 83.4 | 7.99 | 7.99 | 0.67 |
| Example B19 | 83.4 | 7.99 | 7.99 | 0.67 |
| Example B20 | 83.4 | 7.99 | 7.99 | 0.67 |
| Example B21 | 83.4 | 7.99 | 7.99 | 0.67 |
| Example B22 | 83.4 | 7.99 | 7.99 | 0.67 |
| Example B23 | 83.4 | 7.99 | 7.99 | 0.67 |
| Example B24 | 83.4 | 7.99 | 7.99 | 0.67 |
| Example B25 | 83.4 | 7.99 | 7.99 | 0.67 |
| Example B26 | 83.4 | 7.99 | 7.99 | 0.67 |

### Calculation of shrinkage rate and (diameter variation) / (mean diameter)

The size of the obtained green ball and the size of the silicon nitride bare ball were measured based on JIS B 1501, and the shrinkage rate was calculated by the following formula. The shrinkage rate is shown in Table 8 with other measurement results. Shrinkage rate (%) = ((diameter of green ball) - (diameter of silicon nitride bare ball))/(diameter of green ball) × 100

In the above-described measurement, the diameter variation of the silicon nitride bare ball was also calculated. Specifically, the diameters of the silicon nitride bare ball are measured 10 times in different directions, and the mean thereof is defined as the mean diameter of the silicon nitride bare ball. The diameter variation is calculated by a difference between the maximum and the minimum of the measured results (the diameters at 10 points) . The value of (diameter variation (µm) / (mean diameter (mm)) is calculated based on the obtained mean diameter and the obtained diameter variation of the silicon nitride bare ball. The value of (diameter variation (µm) / (mean diameter (mm)) is shown in Table 8 with other measurement results.

### Measurement of maximum diameter and area ratio of inclusion (I) and measurement of maximum diameter of pore

Each of the test pieces of Test Examples B1 to B26 was cut on a section passing the center thereof, and the cutting face was mirror-polished. The mirror-polished cutting face was photographed using VHX5000 produced by KEYENCE CORPORATION, and the photographed image was analyzed using WinRoof produced by MITANI CORPORATION, so that the maximum diameter of the inclusion (I) and the maximum diameter of a pore in the surface layer portion that is a region within 2 mm from the surface of the spherical test piece were measured. The diameter of each of the inclusion (I) and the pore was calculated as a square root of an enveloped area of each of the inclusion (I) and the pore (diameter of inclusion (I) or pore = √(enveloped area of inclusion (I) or pore)). The test piece with no inclusion (I) having a diameter of more than 50 µm in the surface layer portion is evaluated as "A", and the test piece with the inclusion (I) having a diameter of more than 50 µm in the surface layer portion is evaluated as "B". Further, the test piece with no pore having a diameter of more than 50 µm in the surface layer portion is evaluated as "A", and the test piece with the pore having a diameter of more than 50 µm in the surface layer portion is evaluated as "B". The inclusion (I) of which the whole portion exists in the surface layer portion and the pore of which the whole portion exists in the surface layer portion are targets to be measured. Further, a ratio of the total sectional area of the inclusions (I) to the total sectional area of the surface layer portion was calculated (ratio of total sectional area of inclusions (I) = enveloped area of inclusions (I) / total sectional area of surface layer portion × 100) . The result is shown in Table 8.

The obtained spherical silicon nitride bare ball was polished to a sphere G5 based on JIS B 1563, and a spherical test piece having 3/8 inches (diameter of 9.525 mm) was formed.

### Rolling fatigue test

A rolling fatigue test was executed on the obtained spherical test piece using 6206 produced by NTN CORPORATION as a bearing outer ring, a bearing inner ring, and a cage. The rolling fatigue test was executed for test time of 168 hours at a rotation speed of 3,000 minute⁻¹ and a load of 1.5 GPa, and the product lifetime was evaluated. As the lubrication oil, additive-free turbine oil VG56 produced by JXTG ENERGY CORPORATION is employed. The test piece in which the flaking is not caused during the test time is evaluated as "a", and the test piece in which the flaking is caused is evaluated as "b". The result is shown in Table 8.

**Table 8**

| | Shrinkage rate (%) | Diameter variation / Mean diameter | Area ratio of inclusion (I) (%) | Maximum diameter of Inclusion (I) (µm) | Maximum diameter of pore (µm) | Rolling fatigue test |
|---|---|---|---|---|---|---|
| Example B1 | 7.7 | 0.017 | 6.12 | B | A | b |
| Example B2 | 10.6 | 0.010 | 2.20 | A | A | a |
| Example B3 | 10.1 | 0.010 | 0.63 | A | A | a |
| Example B4 | 10.2 | 0.010 | 0.85 | A | A | a |
| Example B5 | 11.1 | 0.011 | 0.77 | A | A | b |
| Example B6 | 10.4 | 0.010 | 0.84 | A | A | a |
| Example B7 | 10.3 | 0.011 | 0.24 | A | A | a |
| Example B8 | 9. 9 | 0.016 | 1.55 | B | A | b |
| Example B9 | 10.4 | 0.009 | 0.72 | A | A | a |
| Example B10 | 10.9 | 0.010 | 0.77 | A | A | a |
| Example B11 | 10.4 | 0.011 | 0.72 | A | A | a |
| Example B12 | 9.1 | 0.010 | 0.02 | A | A | a |
| Example B13 | 10.1 | 0.010 | 0.06 | A | A | a |
| Example B14 | 10.6 | 0.010 | 6.78 | A | A | a |
| Example B15 | 9.8 | 0.009 | 9. 97 | A | A | b |
| Example B16 | 10.2 | 0.007 | 0.91 | A | B | b |
| Example B17 | 9.7 | 0.008 | 0.96 | A | A | a |
| Example B18 | 10.4 | 0.009 | 0.81 | A | A | a |
| Example B19 | 12.3 | 0.020 | 1.31 | A | A | a |
| Example B20 | 10.7 | 0.011 | 0.74 | A | A | a |
| Example B21 | 10.9 | 0.010 | 0. 97 | A | A | a |
| Example B22 | 10.8 | 0.010 | 1.52 | A | A | a |
| Example B23 | 6.7 | 0.017 | 5.89 | B | B | b |
| Example B24 | 10.2 | 0.010 | 0.51 | A | A | a |
| Example B25 | 10.8 | 0.019 | 6.22 | B | B | b |
| Example B26 | 10.6 | 0.021 | 2.21 | B | B | b |

### Analysis of inclusion (I)

The cutting face of the test piece of Example B3 was subjected to an EDX analysis using a scanning electron microscope (S300 produced by Hitachi, Ltd.), and the kind and the content of the element of the inclusion (I) in the surface layer portion were measured. It was found that the inclusion (I) contains a silicide of chromium, and the elements and the contents thereof in the inclusion (I) are chromium (Cr) of 57 wt% and silicon (Si) of 43 wt%.

The embodiment and the examples in this disclosure are merely exemplary and do not limit the scope of the present invention. The scope of the present invention is not defined by the above-described embodiment but the claims, and the equivalent of the claims and modifications of the claims are also encompassed by the scope of the present invention.

### INDUSTRIAL APPLICABILITY

The silicon nitride sintered body of the present invention is suitably applied to a rolling element of a bearing such as a rolling bearing, a linear guide bearing, a ball screw and a linear bearing. The silicon nitride bare ball of the present invention is capable of improving productivity of a product and imparting superior lifetime to the product into which the silicon nitride bare ball is processed, and thus the silicon nitride bare ball is suitably applied to a rolling element of a rolling bearing or a rolling element of a ball screw.

### REFERENCE SIGNS LIST

- 1:: rolling bearing
- 2:: inner ring
- 3:: outer ring
- 4:: ball (rolling element)
- 5:: cage
- 6:: seal member
- 7:: grease
- 8a, 8b:: opening
- 11:: screw shaft
- 12:: screw groove
- 13:: ball nut
- 14:: screw groove
- 15:: ball (rolling element)
- 16:: ball screw seal member
- 21:: spherical sliding bearing
- 22:: inner ring
- 23:: outer ring
- 24:: bearing hole
- 31:: silicon nitride bare ball
- 32:: electric micro meter
- 41:: first surface plate
- 42:: second surface plate
- 43:: first shaft
- 44:: second shaft
- 45:: holding portion
- 46:: green compact
- 47:: green processing device

## Claims

1. A silicon nitride sintered body having a crystallinity of 75-90%.

2. The silicon nitride sintered body as defined in claim 1, containing one or more of Y, Ce, Nd and Eu in an amorphous phase.

3. The silicon nitride sintered body as defined in claim 1, containing a rare earth element and an aluminum element, wherein:
the content of the rare earth element is 6-13 wt% in terms of oxide, relative to the total weight of the silicon nitride sintered body, and
the content of the aluminum element is 6-13 wt% in terms of oxide, relative to the total weight of the silicon nitride sintered body.

4. The silicon nitride sintered body as defined in claim 1, having an inclusion (I) in a surface layer portion that is a region within 2 mm from a surface of the silicon nitride sintered body,
wherein a maximum diameter of the inclusion (I) is 50 µm or less.

5. The silicon nitride sintered body as defined in claim 1, having a pore in a surface layer portion that is a region within 2 mm from a surface of the silicon nitride sintered body, wherein a maximum diameter of the pore is 50 µm or less.

6. A machine part using the silicon nitride sintered body as defined in claim 1.

7. The machine part as defined in claim 6, serving as a rolling element.

8. A bearing using the rolling element as defined in claim 7.

9. A silicon nitride bare ball having (diameter variation (µm) / mean diameter (mm)) of 0.015 or less.

10. The silicon nitride bare ball as defined in claim 9, wherein:
the silicon nitride bare ball is a silicon nitride sintered body containing a rare earth element and an aluminum element,
the content of the rare earth element is 6-13 wt% in terms of oxide, relative to the total weight of the silicon nitride bare ball, and
the content of the aluminum element is 6-13 wt% in terms of oxide, relative to the total weight of the silicon nitride bare ball.

11. The silicon nitride bare ball as defined in claim 9, having an inclusion (I) in a surface layer portion that is a region within 2 mm from a surface of the silicon nitride bare ball,
wherein a ratio of a total sectional area of the inclusion (I) to a total sectional area of the surface layer portion is 0.05% or more.

12. The silicon nitride bare ball as defined in claim 11, wherein:
the inclusion (I) includes an inclusion (It) containing a transition metal element,
the inclusion (It) is a silicide of the transition metal element, and
the transition metal element includes Cr.

13. The silicon nitride bare ball as defined in claim 11, wherein a maximum diameter of the inclusion (I) is 50 µm or less .

14. The silicon nitride bare ball as defined in claim 9, having a pore in a surface layer portion that is a region within 2 mm from a surface of the silicon nitride bare ball, wherein a maximum diameter of the pore is 50 µm or less.
